# EUROPEAN PATENT APPLICATION

(11) **EP 3 144 562 A1**
(43) Date of publication of application: **22.03.2017**
(21) Application number: 15185509.5
(22) Date of filing: 16.09.2015
(51) Int. Cl.: F16H 7/12

(54) **ACCESSORY DRIVE BELT TENSIONER**

(71) Applicant: DSM IP Assets B.V., 6411 TE Heerlen (NL); Muhr und Bender KG, 57439 Attendorn (DE)
(72) Inventor: BUCHEN THomas, D-57489 Atendorn (DE); DIBLIK Jan, 26203 Mokrovraty (CZ); VOLLMER Frederik, D-57392 Schmallenberg-Dorlar (DE); VAN RUITEN Jippe, NL - 6100 Echt (NL); HASANONIC Adnan, NL - 6100 ECHT (NL)
(74) Representative: van der Ploeg, Antonius Franciscus M.J.

(57) **Abstract**

The present invention relates to an accessory drive belt tensioner for use in an engine for motor vehicles, comprising (A) a base, (B) a tensioner arm and (C) a pulley mounted on the tensioner arm (B), wherein A and B are arranged in a pivotal arrangement, A and B are tension loaded and the pivotal arrangement confines a space being aimed for receiving a generator pulley, wherein the tensioner arm is made of a specific thermally conductive plastic composition; comprises cooling fins, the cooling fins being positioned in the vicinity of, or at least partially inside the space confined by the pivotal arrangement; and comprises a bearing surface part (D), for sliding contact with the base A within the pivotal arrangement, consisting of metal.

## Description

The present invention relates to an accessory drive belt tensioner for use in an engine for motor vehicles, also known as front-end accessory drive belt tensioner, more particular to a front-end accessory drive belt tensioner with a tensioner arm made of a plastic material. The invention also relates to an accessory belt drive system, comprising such a drive belt tensioner.

From WO 2006/105656 A1 a belt tensioner for a belt drive is known. The belt tensioner comprises an arm and a pivot bushing, around which the arm is pivotably supported. The arm is a plastic molded part. Fiber reinforced organic resin material is used as plastic material. As reinforcing material glass fibers, aramid fibers, carbon fibers, steel fibers or nano-particles can be used.

Belt drive systems and components thereof are well known and applied in particular in motor vehicles. Belt drive systems in motor vehicles perform two tasks, according to which a distinction can be made between timing belt drive systems, to drive the motion of the vehicles, and accessory belt drive systems to drive accessory components in the engine of a motor vehicle. The timing belt drive controls the valves of the engine by means of a toothed belt which transmits the radial movement of the crankshaft to the camshaft with a ratio of 2:1, thus ensuring that piston motion and valve timing are perfectly synchronized. The so-called accessory drive is used to drive auxiliary equipment, such as alternator, coolant pump, power steering pump or A/C compressor. This function used to be performed by a V-ribbed belt which ensured a non-positive transmission of the torque from the crankshaft to the alternator and the coolant pump. However, in state-of-the-art vehicles more and more electronic equipment is used for enhanced driver comfort. As a result, one V-ribbed belt is no longer sufficient to drive the high-power alternator and frontend accessories, such as A/C compressor or power steering pump. To remedy this problem, a poly V-belt is used, allowing for reduced wrap radii and therefore increased transmission ratios. With particularly small installation space available, accessories can be driven by the front and reverse side of the poly V-belt.

Both timing belt drive systems and accessory belt drive systems are driven by the crankshaft of the engine, and the component thereof are positioned more or less in a plane perpendicular to the crankshaft axis, at one end of the engine. The end of the engine where the accessories driven by the accessory drive belt system is indicated by the term front end, which explains for the accessories also being called front-end accessories and the accessory drive belt tensioner as front-end accessory drive belt tensioner. In rear-driven cars, the engine is positioned in a so-called longitudinal arrangement, with the front-end accessories position at the front side of the engine. On the other hand, with a transversally placed engine, typical for front wheel driven cars, the front end of the engine where the front-end accessories are positioned coincides with the side of a car, i.e. from the perspective when the car is viewed from the front.

The present invention is directed to a accessory drive belt tensioner, more particular to a (front-end) accessory drive belt tensioner made of a plastic material. Front-end accessory drive belt tensioners usually comprise a base (A), a tensioner arm (B) and a pulley (C) mounted on the tensioner arm (B), wherein A and B are arranged in a pivotal arrangement, and wherein A and B are tension loaded in circumferential direction. With tension loaded is understood that a tension force is provided by an actuator, such as by a spring, hydraulic fluid or an electromotor. The base is typically a static part mounted on the engine. The base suitably comprises a pivot bushing around which the tensioner arm is pivotably supported. The tensioner arm, also known as lever arm or idler pulley carrier, or simply as carrier, is a dynamic part. The tensioner arm (B) and the pulley (C), in combination with the mobile pivotal arrangement and the tension load perform a triple function: a bearing function to guide the belt, while keeping a constant tension on the belt and a function of torsion or mechanical damping. The tension load may be performed mechanically, for example by a spring or by hydraulic means, or semi-automatic designs. To provide a proper function of the accessory drive belt tensioner, the tension of the drive belt has to be constant over time as good as possible, and load peaks of the belt dynamics have to be eliminated, meanwhile dampening of vibrations has to be optimal to avoid or reduce slip, noise and belt wear.

The base and the tensioner arm of (front-end) accessory drive belt tensioners are typically made of metal. These tensioners show a very good long term performance, however have their limitations in terms of vibration damping. Although similar parts made of plastic materials have been described, these have never been used in series production of motor vehicles. The most important reason is the problems occurring during long term use, wherein such parts fail to perform properly. Typical problems are, for example, insufficient load bearing properties and problems with friction characteristics, in particular too high friction resulting in overheating.

The aim of the present invention is to provide an accessory drive belt tensioner which shows good damping properties as well as a good long term performance.

This aim has been achieved with the accessory drive belt tensioner according to claim 1. The tensioner according to the invention comprises a base (A), a tensioner arm (B) and a pulley (C) mounted on the tensioner arm (B), wherein A and B are arranged in a pivotal arrangement, A and B are tension loaded and the pivotal arrangement confines a space being aimed for receiving a generator pulley. Herein the tensioner arm B
a) is made of a plastic composition comprising:
   - a thermoplastic polymer;
   - a fibrous reinforcing agent and
   - a thermally conductive filler;
   and having
   - a tensile modulus at 140°C, measured by the method according to ISO 527-1/2, of at least 8 GPa; and
   - an in-plane thermal conductivity (Λ) at 20°C, measured in parallel direction by the method according to ASTM E1461-01, of at least 1.0 W/mK;
b) comprises cooling fins, the cooling fins being positioned in the vicinity of, or at least partly inside the space confined by the pivotal arrangement; and
c) comprises a bearing surface part (D), for sliding contact with the base A within the pivotal arrangement, consisting of metal.

The effect of the accessory drive belt tensioner comprising all features according to the invention shows both good damping properties, requiring less damping energy and less engine power than a corresponding part made of metal, and a very good long term performance, both in terms of retention of low friction as well as high load bearing properties. This latter, i.e. to achieve high load bearing properties, is in contrast with an accessory drive belt tensioner comprising a tensioner arm made of a plastic composition, but not having the features according to the invention. It appears that the said features have a positive synergistic effect on the performance, as it was observed by the inventors that if any one of these features was missing, the long term performance of the accessory drive belt tensioner was still not good enough. It is only when all features are present that the good long term performance is obtained.

Moreover, the plastic composition used for the tension arm requires a relative large amount of fibrous reinforcing agent and relative small amount of thermally conductive filler. Corresponding compositions with relative small amounts of fibrous reinforcing agent and relative large amounts of thermally conductive filler do not perform properly. Compositions with a relative large amount for both fibrous reinforcing agent and thermally conductive filler were hard to process, if these could be produced at all.

The components in the plastic composition, comprising thermoplastic polymer; fibrous reinforcing agent and thermally conductive filler, and optionally further components, may be present in various amounts and ratio's, as long as the property requirements for the tensile modulus and the thermal conductivity are met and the composition can be prepared and processed to form the tensioner arm. Preferably, the amount of fibrous reinforcing agent is significantly larger than the amount of thermally conductive filler, for example more than two times, or even better more than three times as much as the amount of thermally conductive filler. The amount of thermally conductive filler is suitably at least 2 wt.%, relative to the amount of fibrous reinforcing agent, and may be, for example, at least 5 % of the amount of fibrous reinforcing agent.

The thermoplastic polymer may be chosen from a wide range of polymers, in particular polymers that can be used at elevated temperatures. Suitably the thermoplastic polymer is chosen from the group consisting of polyamides, polyesters, polyphenyleneethers (PPE), polyphenylesulfons (PPS), polyetherertheresters (PEEK), polyetherimides (PEI), polyamideimides (PAI) and polyimides (PI). Preferably, the thermoplastic polymer is a semi-crystalline polymer with a melting temperature (Tm) of at least 225 °C and a glass transition temperature (Tg) of at least 100 °C. More preferably, Tm is at least 250 °C and Tg is at least 120 °C. Suitable semi-crystalline polymers are, for example, semi-crystalline semi-aromatic polymers.

With the term melting temperature is herein understood the temperature, measured by the DSC method according to ISO-11357-1/3, 2011, on pre-dried samples in an N2 atmosphere with heating and cooling rate of 10°C/min. Herein Tm has been calculated from the peak value of the highest melting peak in the second heating cycle. With the term glass transition temperature (Tg) is herein understood the temperature, measured by the DSC method according to ISO-11357-1/2, 2011, on pre-dried samples in an N2 atmosphere with heating and cooling rate of 10°C/min. Herein Tg has been calculated from the value at the peak of the first derivative (with respect of time) of the parent thermal curve corresponding with the inflection point of the parent thermal curve. The measurement of Tm and Tg is carried out on pre-dried samples of the polymer composition dried in an N2 atmosphere during 24 hours at 105°C and under a vacuum of 100 mmHg.

The fibrous reinforcing agent is present in a sufficient amount for a tensile modulus at 140°C, measured by the method according to ISO 527-1/2, of at least 8 GPa. The amount needed depends on the type of fibrous reinforcing agent used, the type of polymer, the type and amount of thermally conductive filler and optionally further components present in the composition. The person skilled in the art of making fiber reinforced polymer compositions is able, applying basic knowledge and routine experiments, to set the amount fibrous reinforcing agent to reach the required modulus.

Suitable fibrous reinforcing agents are glass fibers, carbon fibers and ceramic fibers. Herein glass fibers or carbon fibers, or a combination thereof, is preferred. Generally, with glass fibers a higher amount is needed to obtain the required modulus.

Preferably, the plastic composition used for the drive belt tensioner according to the invention, comprises:
- 30 - 70 wt.% of a fibrous reinforcing agent, wherein the fibrous reinforcing agent comprises carbon fibers in an amount of X*(30-60) wt.% and/or glass fibers in an amount of Y*(40-70) wt.%, relative to the total weight of the composition, wherein X is the weight fraction of carbon fibers and Y is the is the weight fraction of glass fibers, relative to the total weight of fibrous reinforcing agent.

To further explain what is meant with the weight fractions X and Y, and how these are used to calculate the amount of carbon fibers and glass fibers, the following examples are given:
- With 100% carbon fibers, and 0% glass fibers or other fibrous reinforcing agents, the values for X and Y and the corresponding amounts of fibers are as follows: X = 1, Y = 0; resulting in the presence of 30-60 wt.% carbon fibers;
- With 0% carbon fibers, 100% glass fibers, and no other fibrous reinforcing agents, the values for X and Y and the corresponding amounts of fibers are as follows: X = 0, Y = 1; 40-70 wt.% glass fibers;
- With 50% carbon fibers, 50% glass fibers, the values for X and Y and the corresponding amounts of fibers are as follows: X = ½, Y = ½; 15-30 wt.% carbon fibers; 20-35 wt.% glass fibers;
- With 20% carbon fibers, 60% glass fibers, 20 % other fibrous reinforcing agents, he values for X and Y and the corresponding amounts of fibers are as follows: X = 0.2, Y = 0.6; 6 - 12 wt.% carbon fibers, 24 - 42 wt.% glass fibers.

Herein the weight percentages (wt.%) are relative to the total weight of the composition.

Thermoplastic polymers and thermoset polymers typically have a low thermal conductivity, generally in the range of about 0.3 to about 0.5 W/mK. In the composition according to the invention, thermally conductive filler is present in a sufficient amount for a thermal conductivity (Λ) at 23°C of at least 1.0 W/mK. Herein the thermal conductivity (Λ) is the in-plane thermal conductivity measured in parallel direction by the method according to ASTM E1461. Herein samples are prepared as described in the experiments further below.

The amount of thermally conductive filler needed depends on the type of thermally conductive filler, as well as on the type and amount of fibrous reinforcing agent used, and may be also, but to less extend on the type of polymer and optionally further components present in the composition. For example with carbon fibers being present the amount needed will be much less than with only glass fibers present in the composition. The person skilled in the art of making thermally conductive fiber reinforced polymer compositions is able, applying basic knowledge and routine experiments, to set the amount thermally conductive filler to reach the required thermal conductivity.

Suitably, the composition comprises 1 - 10 wt.%, preferably 2 - 10 wt.% of the thermally conductive filler. The weight percentages (wt.%) are relative to the total weight of the composition.

The thermally conductive filler in the composition used in the present invention can be any type of thermally conductive filler able to enhance the thermal conductivity of the composition. The thermally conductive filler may be in the form of granular powder, particles, whiskers, short fibers, or any other suitable form. The particles can have a variety of structures. For example, the particles can have flake, plate, rice, strand, hexagonal, or spherical-like shapes. The thermally conductive filler suitably is a granular, a plate like or fibrous material, or a combination thereof. A granular material is herein understood to be a material consisting of particles with an aspect ratio of l/d (length/diameter) of less than 10:1. Suitably, the granular material has an aspect ratio of about 5:1 or less. A fiber is herein understood to be a material consisting of particles with an aspect ratio of at least 10:1. More preferably the thermally conductive fibers consist of fibers with an aspect ratio of at least 15:1, more preferably at least 25:1. A plate like material, also referred to as platelets, is herein understood a material with a relative small thickness compared to its diameter. Suitably, the platelets have an aspect ratio of t/d of less than 0.5, but this may be much smaller, e.g. 0.2 and even less than 0.1.

The thermally conductive filler suitably comprises one or more metallic fillers or metal fibers (for example, aluminum, copper, magnesium, brass), inorganic thermally conductive components (for example silicon nitride, aluminium nitride, zinc oxide, mica, ceramic fiber) and/or carbonaceous components (for example, graphite, expanded graphite, carbon black, carbon fibers) and the like. Mixtures of such thermally conductive fillers are also possible. Suitable carbon-fibers, also known as graphite fibers, include PITCH-based carbon fiber and PAN-based carbon fibers. For example, PITCH-based carbon fiber having an aspect ratio of about 50:1 can be used. PITCH-based carbon fibers contribute significantly to the heat conductivity. On the other hand PAN-based carbon fibers have a larger contribution to the mechanical strength.

It is noted that the carbon fibers can be used to enhance either the mechanical properties, or the thermal conductivity properties or both. If the carbon fibers are used in a sufficient high amount, there might be no need for other fibrous reinforcing agents, or no need for other thermally conductive fillers, or no need for both other fibrous reinforcing agents and other thermally conductive fillers. The embodiment wherein the composition only comprises carbon fibers performing the function of the thermally conductive filler as well as that of the fibrous reinforcing agent is considered to be part of the present invention.

In the calculation of the weight percentages of fibrous reinforcing agent and thermally conductive filler, carbon fiber is fully included in the amount of fibrous reinforcing agent, except for the compositions without another thermally conductive filler. In that case 5 wt.% of the carbon fiber is considered as thermally conductive filler, and subtracted from the amount of carbon fiber attributed to the fibrous reinforcing agent.

The composition used for the drive belt tensioner according to the invention may comprise further components next to the polymer, the fibrous reinforcing agent and the thermally conductive filler. Suitably, the composition comprises one or more auxiliary fillers and or additives used for thermoplastic molding compositions.

The additive or additives, suitably comprises one or more components selected from the group consisting of stabilizers (for example, heat stabilizers and light stabilizers), pigments, colorants, processing aids (for example, lubricants and release agents) and further auxiliary additives used in molding compositions; and any combination thereof.
Examples of such fillers are inorganic fillers, for example talcum, calcium carbonate, metal oxides, metal borates, metal sulphates, graphite and glass beads.

Apart from the tensile modulus and the thermal conductivity, the plastic composition in the drive belt tensioner according to the invention preferably has a volumetric electrical resistivity (P) of at most 10⁸ Ohm*m. Herein the volumetric electrical resistivity (P) is measured by the standardized test method according to ICE 60093, wherein the measurement is done at 23 °C, on a dry plate in the plate thickness direction. The advantage of the composition being electrically conductive, at least to some extent, is that this prevents static charging due to the dynamic movements in the drive belt and thus reduces the risk of sparking.

The composition can be made electrically conductive, at least to some extent, by using one or more thermally conductive fillers that are also electrically conductive. Examples thereof include carbonaceous components, such as, for example, graphite, expanded graphite and carbon black.

In a preferred embodiment of the invention the thermally conductive filler comprises expanded graphite. The advantage thereof is that expanded graphite can be used in a low amount while already imparting sufficient thermal conductivity, while the use in somewhat larger amounts also contributes a sufficient electrically conductivity to the composition.

Also preferably, the plastic composition in the drive belt tensioner according to the invention has creep modulus (Ec) of at least 6 GPa at 140°C. Herein the creep modulus is measured by the method according to ISO 899-1 at a load at 50 MPa and a loading time of 1000 hours. The advantage hereof is that the drive belt tensioner has improved dimensional stability under the load bearing conditions in practical use.

The drive belt tensioner according to invention has cooling fins positioned in the vicinity of, or at least partly inside the space formed by the pivotal arrangement, and aimed for receiving a generator pulley.

With the term "space" in "space formed by the pivotal arrangement and" is herein meant the opening within the pivotal arrangement aimed for receiving a generator pulley, as well as the cylindrical extension thereof.

With the term "vicinity" in "in the vicinity of" is herein meant a position nearby or in the opening as well as nearby or in the cylindrical extension thereof.

Preferably the fins or at least thereof part are within cylindrical extension of the opening. More preferably the cooling fins are at least partly positioned inside the opening, while leaving a clearance between the fins and the generator pulley to be received in said opening. The advantage of the fins or parts thereof positioned within cylindrical extension of the opening, and even more so within said opening is that the drive belt tensioner performs even better and shows even less increase friction on the long term.

In an additional preferred embodiment that refers to an accessory belt drive system comprising a belt drive tensioner according to one or more of the above embodiments as well as an accessory with a drive pulley, the drive pulley of the accessory may also comprise fins. The advantage is that the pulley rotates and creates an air flow; heat generated at the pivotal contact can easily move away radially to the fins at close distance and is further dissipated by the air generated by the pulley.

The tensioner arm in the drive belt tensioner according to the invention comprises an inner bearing surface part consisting of metal. In a preferred embodiment, said metal part is at least partly overmolded with the plastic composition. The metal part being at least partly overmolded enhances the long term performance of the drive belt tensioner in belt drive systems.

Suitably, the metal part has a thickness of at least 0.5 mm, preferably at least 0.75, more preferably at least 1.0, or better 1.5 and even better at least 2.0 mm. A larger thickness further enhances the long term performance of the drive belt tensioner in belt drive systems.

Suitably, the base A in the drive belt tensioner according to the invention has an outer bearing surface part made of a low friction and wear resistant plastic material. Suitably, said wear resistant plastic material is, for example, a PTFE filled thermoplastic polyamide.

The base A suitably comprises a pivot bushing for pivotal arrangement with the tensioner arm, wherein the outer bearing surface part is positioned at the inside of the pivot bushing.

Also suitably, the base A is made of a second plastic composition. The second plastic composition may be different from the first plastic composition of the tensioner arm. Herein the second plastic composition being different, has different material properties than the plastic composition of the tensioner arm. More specifically, the second plastic composition may comprise such a material that the second plastic composition has a thermal conductivity (Λ) at 23°C, measured by the method according to ASTM E1461-01, of less than 1.0 W/mK and/or of more than 0.3 W/mK.

According to an embodiment of the drive belt tensioner, the material of the inner bearing surface part has a higher thermal conductivity (Λ) than the material of the outer bearing surface part and, furthermore, the material of the outer bearing surface part has a higher thermal conductivity (Λ) than the second plastic composition of the base A. This configuration contributes to a good thermal conductivity from the bearing towards the radial outside of the drive belt tensioner, i.e. towards the base of the drive belt tensioner. In combination with the specific configuration of the material for the tensioner arm, the drive belt tensioner has an overall high thermal conductivity which thus features a long service life.

In an exemplary embodiment, the material of the inner bearing surface part can have a thermal conductivity (Λ) of more than 50 W/mK; the material of the outer bearing surface part can have a thermal conductivity (Λ) of more than 0.5 W/mK and/or less than 2.0 W/mK; the material of the base, i.e. the second plastic composition, can have a thermal conductivity (Λ) of less than 1.0 W/mK and/or more than 0.3 W/mK.

In another embodiment, the second plastic composition of the base A has a higher thermal conductivity (Λ) than the outer bearing surface part. The second plastic composition is suitably made of a reinforced polymer composition, more particular a thermally conductive polymer composition

In an exemplary embodiment, the material of the inner bearing surface part can have a thermal conductivity (Λ) of more than 50 W/mK; the material of the outer bearing surface part can have a thermal conductivity (Λ) of less than 1.0 W/mK; the material of the base, i.e. the second plastic composition, can have a thermal conductivity (Λ) of more than 1.0 W/mK and/or less than 2.0 W/mK.

In an embodiment the base is made of a second plastic composition, and the second plastic composition is overmolded, at least at a bearing surface part, with a layer of a wear resistant plastic material.

The tensioner arm can be made from the plastic composition by any conventional method suitable for the plastic composition. Such methods are known to the person skilled in the art of processing fiber reinforced plastic compositions. Preferably, the tensioner arm is made by injection molding of the plastic composition, wherein the fins are integrally molded together with the tensioner arm.

The invention also relates to an accessory belt drive system, comprising a (one or more) drive belt tensioner according to the invention or any of the above modifications and embodiments.

In one embodiment, the accessory belt drive system comprises the drive belt tensioner comprises the base (A) and the tensioner arm (B), wherein A and B are arranged in a pivotal arrangement, and further comprising a generator pulley centrally positioned inside the pivotal arrangement.

In a particular embodiment of the invention, the accessory belt drive system is an alternator start stop belt tensioner system having two drive belt tensioners according to the invention or any embodiment thereof, arranged in a single pivotal arrangement, and comprising an alternator pulley as the generator pulley centrally positioned inside the pivotal arrangement.

The invention is illustrated with the following figures.
- Figure 1: a drive belt tensioner according to the invention in an exploded view in a first perspective from diagonally above;
- Figure 2: the drive belt tensioner of Figure 1 in a second perspective view from diagonally below;
- Figure 3: the drive belt tensioner of Figure 1 in the mounted condition in a perspective view from diagonally above;
- Figure 4: the drive belt tensioner of Figure 1 in the mounted condition in a perspective view from diagonally below;
- Figure 5: the drive belt tensioner of Figure 1 in a longitudinal sectional view;

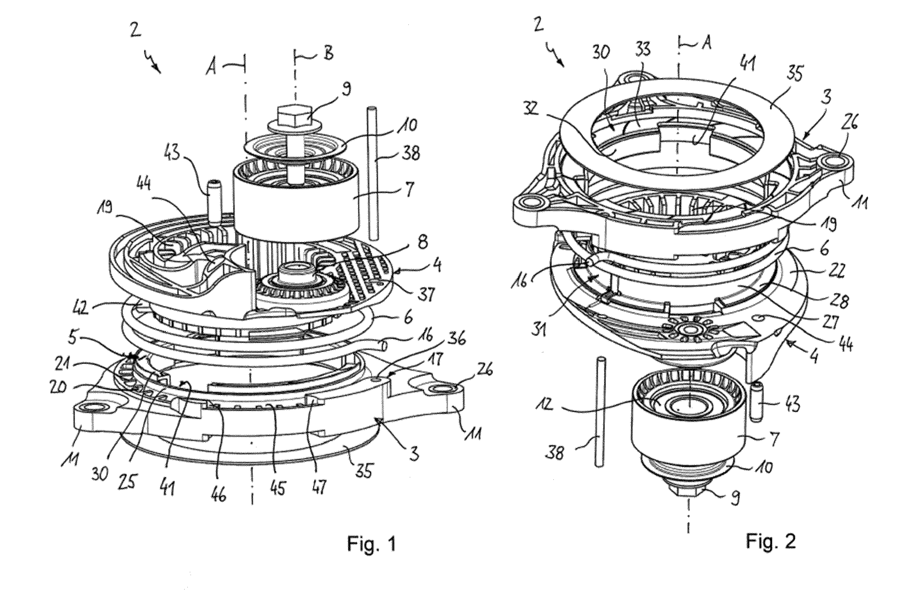

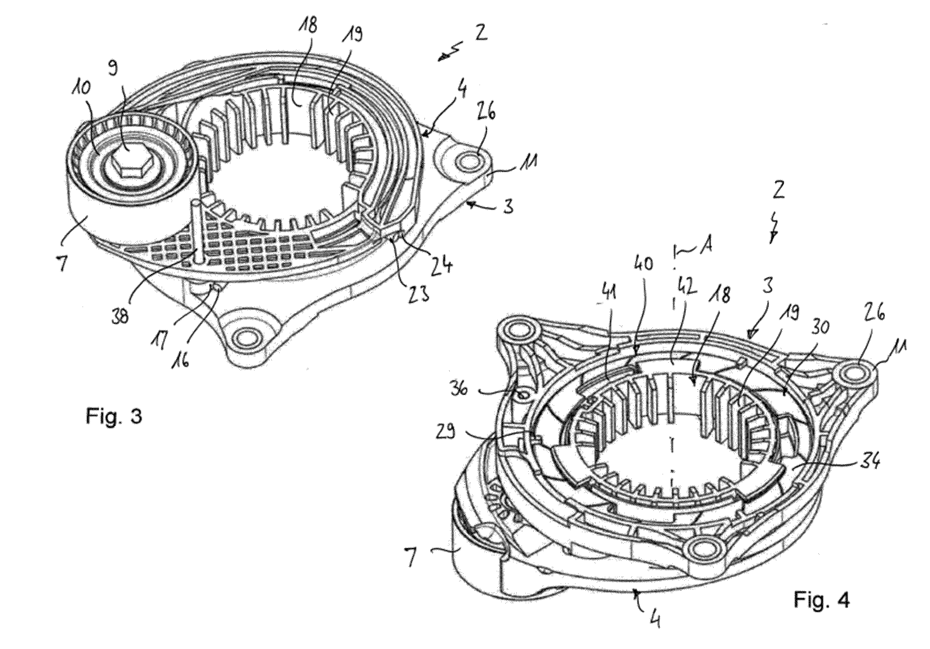

Figures 1 to 5, which are described jointly below, show a drive belt tensioner 2 according to the invention that can also be referred to as belt tensioning device. The drive belt tensioner 2 comprises a base member 3 which can be attached to a stationary component such as an accessory (not shown), a tensioner arm 4 which is pivotably supported relative to the base member 3 by a bearing arrangement 5 around a pivot axis A, and a spring element 6 which resiliently supports the tensioner arm 4 against the base member 3 in circumferential direction. For mounting the base member 3 this has three flange portions 11, projecting radially outwards and having bores, through which screws can be passed for attaching on the stationary component.

The tensioner arm 4 carries at a free end portion a tensioning roller 7, which is rotatable around an axis of rotation B arranged parallel to the pivot axis A. The tensioning roller 7 is rotatably supported on a reinforcing element 8 of the tensioner arm 4 and is attached thereto by means of a screw 9. Furthermore, a disc 10 is provided axially next to the tensioning roller 7, which protects the bearing 12 against penetrating dirt. The tensioner arm 4 is axially and radially supported relative to the base member 3 via the bearing arrangement 5 so as to be rotatable around the pivot axis A. The tensioner arm 4 is connected via a connection mechanism 13 to the base body 3. The tensioner arm 4 is arranged at least approximately in a plane with the bearing arrangement 5, so that the axial size of the device is small.

The spring element 6 is formed as a helical spring, wherein a spring center line or spring axis extends essentially parallel to the pivot axis A. A first spring end 16 of the helical spring 6 is bent radially outward and is supported on a corresponding abutment face 17 of the base member 3 in circumferential direction. The opposite second spring end 23 of the helical spring 6 is also bent radially outward and is supported on a corresponding abutment face 24 of the tensioner arm 4 in circumferential direction. The helical spring 6 effects a spring-loaded tensioning of the tensioner arm 4 relative to the base member 3, so that the belt of the belt drive is pre-tensioned.

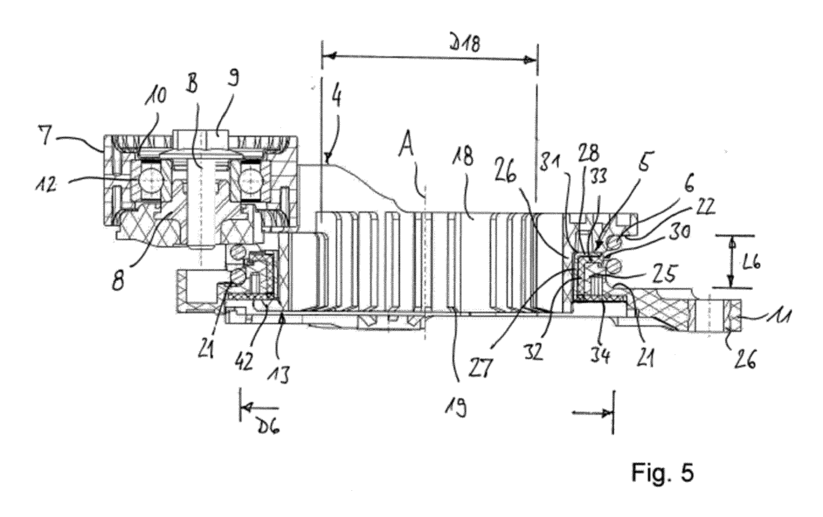

The helical spring 6 is arranged coaxially outside of the bearing arrangement 5 for supporting the tensioner arm 4. The helical spring 6 and the bearing arrangement overlap at least with partial portions in axial direction, to keep the design space small in axial direction. It can be seen especially in Figure 5, that the helical spring 6 has a proportionally large diameter in relation to the axial length. The number of turns is larger than one and smaller than two. Preferably, the circumferential extension of the helical spring 6 is between 540° and 690°. The ratio of nominal diameter D6 of the helical spring 6 to the axial length L6 is, in the mounted condition of the helical spring, in which the helical spring is axially pre-tensioned, between 3.0 and 9.0, especially between 5.0 and 8.0. It is understood, that said values are not limiting and that other values can be used. Within said ranges all intermediate ranges can be considered. In principle, also - depending on the design space conditions - larger values than 9.0 can be used, whereby the spring would then be in relation to the diameter extremely short in axial direction. Furthermore, it is obvious, that the named ratio of spring diameter to the axial length in the mounted condition is also dependent on the wire diameter of the spring wire. The larger the wire diameter the smaller the axial length of the helical spring 6 can be selected.

The drive belt tensioner 2, respectively the tensioner arm 4 has a through opening 18, which is arranged coaxially to the longitudinal axis A. In this manner, the base member 3 can be screwed to an accessory in a simple manner, wherein an end of the drive shaft can also extend into the through opening 18, if necessary. Overall, an axially very short design is achieved. At least in a portion of the through opening 18, a smallest inner diameter D18 of the through opening 18 is preferably larger than an outer diameter of the drive shaft (not shown) and is especially also larger than an outer diameter of the belt pulley (not shown) connected to the drive shaft. The base member 3 has an annular portion 25 for supporting the tensioner arm 4. From the annular portion 25 a flange portion extends radially outward, which serves as axial support face 21 for the helical spring 6. Several attachment portions 11 project radially outward from the flange portion, each attachment portion having a respective bore for attaching the base member 3 on the stationary component. The attachment portions 11 are arranged on a larger diameter relative to the flange portion and relative to the helical spring 6. Thus, forces and moments acting on the base member 3 can be supported well and transferred into the stationary component.

The helical spring 6 is inserted with axial pre-tension between the support face 21 of the base member 3 and an axial opposite support face 22 of the tensioner arm 4. In this manner, the tensioner arm 4 is loaded axially away from the base member 3, wherein said components are axially supported on each other via the connection mechanism. The support face 21 for the spring 6 extends via a circumferential partial portion of the base member 3. At least a partial portion of the support face 21 is arranged in a plane, which has an axial overlap with the drive shaft. The support face 21 of the base member 3 has in circumferential direction the shape of a ramp, which is adapted to the incline of the helical spring 6. It can be seen especially in Figure 1, that the support face 21 of the base member 3 is formed by circumferentially distributed and radially extending ribs on which the spring 6 is axially supported in the mounted condition. Between the ribs respectively recesses 20 are formed, which prevent a mass accumulation in this area. Incidentally, the ribs affect in an advantageous manner a good transfer of frictional heat, which is produced during the operation of the drive belt tensioner.

In the embodiment disclosed herein, the drive belt tensioner 2 is formed such, that the bearing arrangement 5 of the tensioner arm 4 is arranged on the base member 3 in view of the accessory 28 behind the belt plane. The belt plane is the plane, which is formed by the belt center in the mounted condition. The bearing arrangement 5 comprises at least one first bearing element 30 which is associated to the base member 3, and a second bearing element 31 which is associated to the tensioner arm 4. The first bearing element 30 can also be referred to as outer bearing surface part, and the second bearing element 31 can also be referred to as inner bearing surface part 31.

The first bearing elements 30 are, when seen in a half longitudinal section view, approximately C-like and have radially inwards a cylindrical portion 32, from which two flange portions 33, 34 project radially outward. The first bearing elements 30 thus encompass the annular portion 25 of the base body. The first flange portion 33, which is facing the tensioner arm 4, forms an axial bearing face, to support the tensioner arm 4 in a first axial direction, while the second flange portion 34, which is axially distanced to the first flange portion 33, forms an axial bearing face for the tensioner arm 4 in an opposite second axial direction. The cylindrical portions 32 form a radial bearing face for the tensioner arm 4.

The first bearing elements 30 and the base member 3 are integrally produced, especially by multi component injection molding. In this case, the first bearing elements 30 are made from a different plastic material than the base member 3. The bearing material consists of a low friction plastic material, for example a high strength polyamide with polytetrafluoroethylene (PTFE) components with a strength of for example between 2,000 MPa and 4,000 MPa. Relative thereto, the plastic material of the base member 3 can be a fiber reinforced polyamide with a strength of for example between 15,000 MPa and 22,000 MPa. By means of the multi component injection molding method, the unit of the base member 3 with first bearing elements 30 can be manufactured in a simple manner and cheaply with one tool in one working step.

The tensioner arm 4 has a sleeve portion 39, onto which the second bearing element 31 is pressed which is formed as a bearing bushing. The bearing bushing 31 is especially a formed sheet metal part and can for example be made from aluminum or an aluminum alloy. A bushing portion 27 of the bearing bushing and the cylindrical portion 32 of the first bearing element 30 form a radial bearing, while a flange portion 28 of the bearing bushing 31 and the flange portions 33 of the first bearing element 30 form an axial bearing.

For pre-tensioning the drive belt tensioner in a mounting position, the tensioner arm 4 and the base member 3 are rotated relative to each other so far, till the mounting bores 36, 37 align with each other, so that the mounting pin 38 can be inserted into these. In this mounting position, the base member 3 of the drive belt tensioner 2 is mounted on the accessory. After completion of the mounting of the belt drive and of the belt around the drive pulley of the accessory, the mounting pin 38 is pulled and the tensioner arm 4, due to the pre-tensioning force of the spring 6, is loaded against the belt.

Preferably a high strength fiber reinforced plastic material can be used as base material for the base member 3 and the tensioner arm 4, for example a glass fiber reinforced polyamide. It can be seen especially in Figure 5, that reinforcing elements 8, 26 are provided in the base member 3 and the tensioner arm 4, which are made from a different material. In particular, the base member 3 has reinforcing elements in the form of bushings 26 provided at the connection portions 11. The bushings 26 are made from a metal material and are over-molded with the plastic material of the base member 3. The tensioner arm 4 has a reinforcing element 8 formed as a metal bearing journal 8, which is over-molded with the basic plastic material and serves as carrier for the bearing 12 of the tensioning roller 7.

The tensioner arm 4 is made of a plastic composition comprising: a thermoplastic polymer; a fibrous reinforcing agent and a thermally conductive filler. The plastic composition has a tensile modulus at 140°C, measured by the method according to ISO 527-1/2, of at least 8 GPa; and a thermal conductivity (Λ) at 20°C, measured by the method according to ASTM E-1461-01, of at least 1.0 W/mK.

The base member 3 is made from a second plastic composition that is different than the plastic composition of the tensioner arm 4. For a good thermal behavior of the belt tensioner 2 the material of the second bearing element 31 has a higher thermal conductivity (Λ) than the material of the first bearing element 30. Furthermore, the material of the first bearing element 30 can have either a higher or a lower thermal conductivity (Λ) than the second plastic composition of the base A. For example, the material of the second bearing element 31 can have a thermal conductivity (Λ) of more than 50 W/mK; the material of the first bearing element 30 can have a thermal conductivity (Λ) of more than 0.5 W/mK and less than 2.0 W/mK; and the material of the base member 3 can have a thermal conductivity (Λ) of less than 1.0 W/mK and more than 0.3 W/mK. Alternatively, the material of the second bearing element 31 can have a thermal conductivity (Λ) of more than 50 W/mK; the material of the first bearing element 30 can have a thermal conductivity (Λ) of less than 1.0 W/mK; the material of the base member 3 can have a thermal conductivity (Λ) of more than 1.0 W/mK and less than 2.0 W/mK.

The through opening 18 of the tensioner arm 4 is formed such, that the drive shaft and/or the belt pulley of an accessory (not shown) can extend thereinto in the mounted condition. The wall of the tensioner arm 4 encasing the through opening 18 is provided with circumferentially distributed cooling fins 19, that can also be referred to as ribs. The cooling fins 19 serve especially for two functions, namely they transfer the frictional heat produced during operation away from the tensioner arm 4. Furthermore, the ribs 19 contribute to a targeted air supply in direction towards the accessory, on which the drive belt tensioner is mounted, to effectively cool it.

The invention is further illustrated with the following examples and comparative experiments.

### Materials

| | |
|---|---|
| M-1: | polyamide composition comprising 39 wt.% of PA46, 60 wt.% of glass fibers, and 1 wt.% of auxiliary additives; parallel = 0.56 W/mK; tensile modulus 9.5 GPa at 140 °. |
| M-2 | polyamide composition comprising 40.5 wt.% of PA46, 55 wt.% of glass fibers, 3.5 wt.% thermally conductive filler, and 1 wt.% of auxiliary additives; parallel = 1.34 W/mK; tensile modulus 9 GPa at 140 °. |

### Methods

### Thermal conductivity

Thermal conductivity measurements were carried out according ASTM E1461-01 and were done on injection-molded plates, dried as molded, at 23 °C in-plane in the direction parallel to the melt flow direction. Herein the thermal conductivity Λ is derived from the thermal diffusivity (D) measured by laser flash technology, the bulk density (ρ) and the specific heat (Cp) at 23°C, using the method described in Polymer Testing (2005, 628-634), wherein thermal conductivity Λ is calculated as Λ=α*ρ* Cp.

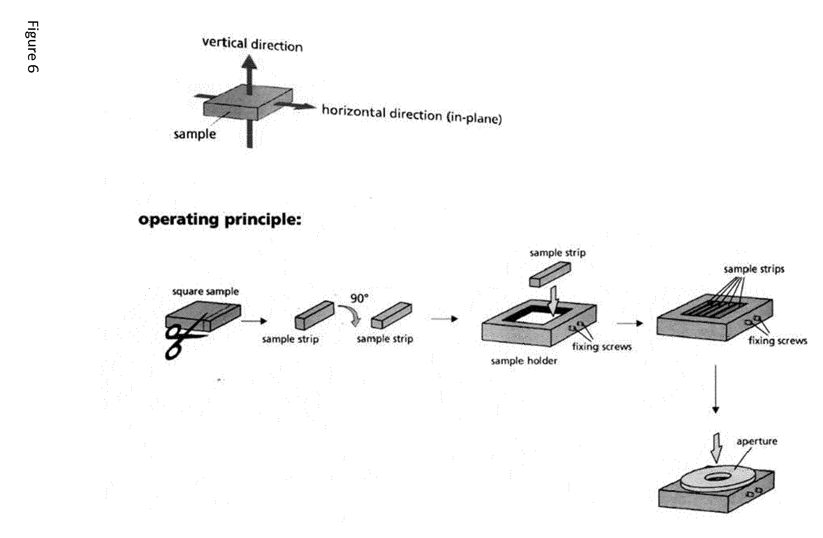

The samples for the measurement in parallel direction were prepared as follows. First an injection-molded plate with dimensions 80 x 80 x 1 mm was injected from a gate at the middle of one of the sides. Than a piece of 10 x 10 x 1 mm was cut from the center. From this part 10 samples of 10x1x1 mm were cut, wherein the length of100 was perpendicular to the flow direction. Then the samples was rotated 90° around its length axis and put next to each other to form a new arrangement of 10x10x1 to allow the parallel in-plane measurement instead of the through plane measurement. This is illustrated in Figure 6.

### Electrical resistivity

The electrical resistivity measurements were based on the volumetric resistivity measured by the test method according to ICE 60093. The test was done at 23 °C on a plate, dried as molded, and measured in the plate thickness direction.

### Tensile modulus

The tensile modulus was measured by the method according to ISO 527-1/2, at a temperature of 140°C, on molded test samples, plate, dried as molded.

### Tests

Accessory drive belt tensioners were prepared with the tensioner arm made by injection molding from the above materials, wherein modifications were applied with and without fins, and with and without a bearing surface part consisting of metal. The weight of the molded parts was about 130 grams and the surface areas of the fins was about 85 cm².

The modification with the tensioner arm made of M-2, in combination with the fins and the metal part showed a very good long term performance. All other modifications were insufficient.

## Claims

1. Accessory drive belt tensioner, comprising (A) a base, (B) a tensioner arm and (C) a pulley mounted on the tensioner arm (B), wherein A and B are arranged in a pivotal arrangement, A and B are tension loaded and the pivotal arrangement confines a space being aimed for receiving a generator pulley, wherein the tensioner arm B
a) is made of a plastic composition comprising:
- a thermoplastic polymer;
- a fibrous reinforcing agent and
- a thermally conductive filler;
and having
- a tensile modulus at 140°C, measured by the method according to ISO 527-1/2, of at least 8 GPa; and
- a thermal conductivity (Λ) at 23°C, measured in plane in parallel direction by the method according to ASTM E-1461-01, of at least 1.0 W/mK;
b) comprises cooling fins, the cooling fins being positioned in the vicinity of, or at least partially inside the space confined by the pivotal arrangement; and
c) comprises a bearing surface part (D), for sliding contact with the base A within the pivotal arrangement, consisting of metal.

2. Drive belt tensioner according to claim 1, wherein the plastic composition comprises:
- 30 - 70 wt.% of a fibrous reinforcing agent, wherein the fibrous reinforcing agent comprises carbon fibers in an amount of X*(30-60) wt.% and/or glass fibers in an amount of Y*(40-70) wt.%, relative to the total weight of the composition, wherein X is the weight fraction of carbon fibers and Y is the weight fraction of glass fibers, relative to the total weight of fibrous reinforcing agent; and
- 1 - 10 wt.% of a thermally conductive filler, relative to the total weight of the composition.

3. Drive belt tensioner according to claim 1 or 2, wherein the plastic composition has a volumetric electrical resistivity (P) of at most 10⁸ Ohm*m, measured at 23 °C by the standardized test method according to ICE 60093.

4. Drive belt tensioner according to claim 1 or 2, wherein the thermally conductive filler comprises expanded graphite.

5. Drive belt tensioner according to any of the previous claims, wherein the plastic composition has creep modulus (Ec) at 140°C, measured by the method according to ISO 899-1 at a load at 50 MPa and a loading time of 1000 hours, of at least 6 GPa.

6. Drive belt tensioner according to any of the previous claims, wherein the cooling fins are at least partly positioned inside the space formed by the pivotal arrangement and aimed for receiving a generator pulley, while leaving a clearance between the fins and the generator pulley.

7. Drive belt tensioner according to any of the previous claims, wherein the mathematical product of Z*W^{1/2}, wherein W is the weight of the tensioner arm in grams and Z is the surface area of the cooling fins in cm², is at least 500 (g^{1/2}cm²).

8. Drive belt tensioner according to any of the previous claims, wherein the tensioner arm B comprises an inner bearing surface part consisting of metal, and wherein the inner bearing surface part is at least partly overmolded with the plastic composition.

9. Drive belt tensioner according to claim 8, wherein the inner bearing surface part consisting of metal has an average thickness of at least 1 mm.

10. Drive belt tensioner according to any of the previous claims, wherein the base A has an outer bearing surface part made of a low friction and wear resistant plastic material.

11. Drive belt tensioner according to any of the previous claims, wherein the base is made of a second plastic composition having different material properties than the plastic composition of the tensioner arm.

12. Drive belt tensioner according to claim 10, wherein a part of the second plastic composition of the base is overmolded by a layer of the wear resistant plastic material.

13. Drive belt tensioner according to any one of claims 9 to 12, wherein the material of the inner bearing surface part has a higher thermal conductivity (Λ) than the material of the outer bearing surface part, and wherein the material of the outer bearing surface part has a higher thermal conductivity (Λ) than the second plastic composition of the base A.

14. Drive belt tensioner according to claim 13, wherein the thermal conductivity (Λ) of the material of the inner bearing surface part amounts to more than 50 W/mK, wherein the thermal conductivity (Λ) of the material of the outer bearing surface part amounts to less than 1.0 W/mK, and wherein the thermal conductivity (Λ) of the second plastic composition is less than 2.0 W/mK and more than 0.5 W/mK.

15. Accessory belt drive system, comprising at least one drive belt tensioner according to any of the above claims, at least one accessory with a drive pulley as well as a drive belt for driving the drive pulley.

16. Accessory belt drive system according to claim 15, wherein the base (A) and the tensioner arm (B) of the drive belt tensioner are arranged in a pivotal arrangement, wherein the drive pulley is centrally positioned inside the pivotal arrangement.

17. Accessory belt drive system according to claim 15 or 16, wherein the accessory belt drive system is an alternator start stop belt tensioner system having two drive belt tensioners according to any of the claims 1-14, and comprising an alternator pulley as the generator pulley centrally positioned inside the pivotal arrangement.
